# EUROPÄISCHE PATENTANMELDUNG

(11) **EP 1 582 753 A1**
(43) Veröffentlichungstag der Anmeldung: **05.10.2005**
(21) Anmeldenummer: 04007529.3
(22) Anmeldetag: 29.03.2004
(51) Int. Cl.: F16B 47/00, A47G 1/17, C09J 11/04, C09J 9/00

(54) **Befestigungselement zur Befestigung an einem Grundkörper sowie Verfahren zur Befestigung eines Befestigungselement**

(71) Anmelder: Sika Technology AG, 6340 Baar (CH)
(72) Erfinder: Blank, Norman, 8803 Rüschlikon (CH); Finter, Jürgen, 8037 Zürich (CH)
(74) Vertreter: Isler, Jörg

(57) **Zusammenfassung**

Bei einem Befestigungselement zur Befestigung an einem Grundkörper, insbesondere für Bauwerksoberflächen besteht das Befestigungselement aus einer Halterung und einem reaktiven Klebstoff.

## Beschreibung

### Technisches Gebiet

Die Erfindung geht aus von einem Befestigungselement zur Befestigung an einem Grundkörper nach dem Oberbegriff des ersten Anspruches.
Die Erfindung geht ebenfalls aus von einem Verfahren zur Befestigung eines Befestigungselement Oberbegriff der unabhängigen Verfahrensansprüche.

### Stand der Technik

Zur Befestigung von Gegenständen, insbesondere im Baubereich werden Befestigungselemente, z.B. Halterungsbolzen, beliebiger Art durch Verankerung im Grundmaterial befestigt. Dazu wird z.B. in eine Betonwand ein Loch gebohrt, ein Dübel eingesetzt und der Halterungsbolzen in den Dübel eingeschraubt oder die Bolzen werden in das Loch eingemauert oder geklebt. Dies ist jedoch sehr aufwendig und benötigt mehrere Verfahrensschritte.
Bei anderen Grundmaterialien ist die Befestigung teilweise noch schwieriger, da diese Materialien wie Stahl, Keramik oder Glas nur schwer zu bearbeiten sind.

Zwar gibt es auch Befestigungssysteme mit thermoplastischen Klebstoffen, diese haben jedoch nur eine geringe Traglast und die Verklebung ist nicht dauerhaft.

### Darstellung der Erfindung

Der Erfindung liegt die Aufgabe zugrunde, bei einem Befestigungselement zur Befestigung an einem Grundkörper sowie einem Verfahren zur Befestigung eines Befestigungselements der eingangs genannten Art eine einfache und sichere Befestigung zu ermöglichen.

Erfindungsgemäss wird dies durch die Merkmale des ersten Anspruches erreicht.

Kern der Erfindung ist es also, dass das Befestigungselement aus einer Halterung und einem reaktiven Klebstoff besteht.

Die Vorteile der Erfindung sind unter anderem darin zu sehen, dass durch das erfindungsgemässe Befestigungselement eine einfache und schnelle Applikation ermöglicht wird. Dies ist zudem auf allen Untergründen möglich, da der reaktive Klebstoffe einfach diesen Untergründen angepasst werden kann. Zudem ist die Applikation solcher Befestigungselemente viel einfacher und sicherere als mit den herkömmlichen Verfahren.

Es ist besonders zweckmässig wenn im Klebstoff auf Wechselfelder reagierende Partikel angeordnet sind. Dadurch ist eine schnelle Aushärtung des Klebstoffes durch Wechselfelder möglich.

Es ist zudem besonders zweckmässig, wenn einkomponentige Klebstoffe mit Blockierung verwendet werden. Diese Klebstoffe erlauben eine einfache Anwendung. Die Klebstoffe sind äusserst lagerstabil aufgrund der doppelten Blockierung von Harz und Härter und weisen keine Anfälligkeit auf Feuchtigkeit auf. Durch eine strahlungsinduzierte Erwärmung des Klebstoffs kann eine rasche Aushärtung erzielt werden, ohne dass die Umgebung mit aufgeheizt wird. Solche Klebstoffe weisen zudem gute mechanische Festigkeit auf, welche in einem weiten Bereich einstellbar sind.
Auch bei zweikomponentigen Klebstoffen treffen diese Vorteile zu, die Komponenten müssen jedoch getrennt aufbewahrt werden und einfach freisetzbar sein.

Weitere vorteilhafte Ausgestaltungen der Erfindung ergeben sich aus den Unteransprüchen.

### Kurze Beschreibung der Zeichnung

Im folgenden werden anhand der Zeichnungen Ausführungsbeispiele der Erfindung näher erläutert. Gleiche Elemente sind in den verschiedenen Figuren mit den gleichen Bezugszeichen versehen.

Es zeigen:
- Fig. 1: eine schematische Darstellung des erfindungsgemässen Haltesystems;
- Fig. 2: eine schematische Darstellung eines Befestigungsmittels mit einem Haftmittel;
- Fig. 3: eine schematische Darstellung eines Befestigungsmittels mit Berstmitteln;
- Fig. 4: eine schematische Darstellung des Klebstoffes aus Fig. 3 mit verpackten Komponenten;
- Fig. 5: eine weitere schematische Darstellung des Klebstoffes aus Fig. 3 mit verpackten Komponenten.

Es sind nur die für das unmittelbare Verständnis der Erfindung wesentlichen Elemente gezeigt. Nicht dargestellt sind von der Anlage beispielsweise der Wechselfeldgenerator sowie zugehörige Maschinen.

### Weg zur Ausführung der Erfindung

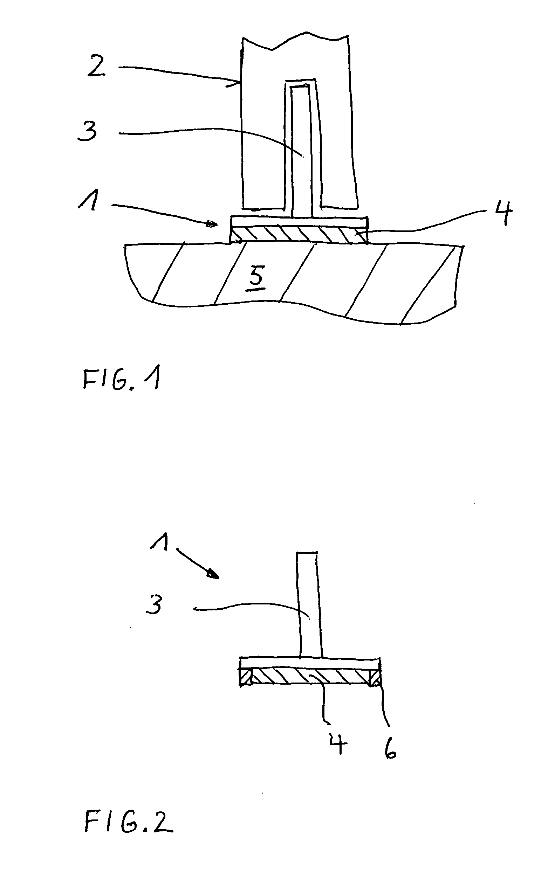

Bei der vorliegenden Erfindung wird ein lagerstabiles reaktives Klebesystem verwendet, um ein Befestigungselement an einem Grundkörper zu befestigen. Nach Fig. 1 umfasst ein solches Befestigungselement 1 eine Halterung 3 und einen Reaktionsklebstoff 4. Das Befestigungselement 1 wird mittels einer Befestigungsvorrichtung am Grundkörper 5 befestigt. Es versteht sich von selbst, dass das Befestigungselement beliebige Ausformungen annehmen kann, und den jeweils daran zu befestigenden Elementen angepasst werden kann und muss.

Für den Reaktionsklebstoff können verschiedenste Systeme zur Anwendung gelangen. Ein wesentlicher Punkt der hier vorliegenden Erfindung ist jedoch, dass das Befestigungselement möglichst schnell auf dem Grundkörper befestigt werden kann, d.h. das die Applikation des Befestigungselements möglichst wenig Zeit beansprucht. Dazu kann einerseits der reaktive Klebstoff so ausgelegt werden, dass eine schnelle Aushärtung erfolgt, andererseits kann das Befestigungselement auch mittels anderer Haftmittel 6 (Fig. 2) so lange am Grundkörper gehalten werden, bis der reaktive Klebstoff genügend Klebwirkung erzeugt.

Im folgenden werden reaktive Klebstoffe gezeigt, welche für die Erfindung verwendet werden können. Natürlich können auch andere Klebstoffe zur Anwendung gelangen, wenn sie die geforderten Eigenschaften aufweisen.

### Beispiele für reaktive Klebstoffe: Einkomponentige Systeme

Bei einem beispielsweise für die Erfindung verwendbaren Reaktionsklebstoff handelt es sich um eine lagerstabile, einkomponentige Polyurethanzusammensetzung, welche dadurch gekennzeichnet ist, dass sie mindestens ein blockierte Isocyanatgruppen enthaltendes Polyurethanpolymer A, mindestens einen blockierten Härter B, mindestens einen Typ von Nanopartikeln **C** mit ferromagnetischen, ferrimagnetischen, superparamagnetischen oder piezoelektrischen Eigenschaften, mindestens ein Additiv D, sowie optional weitere Komponenten enthält. Beim Anlegen von elektrischen, magnetischen und/oder elektromagnetischen Wechselfeldern werden die Nanopartikel C gezielt angeregt, wodurch sich ihre Umgebung durch Energieübertragung stark erwärmt. In Folge dieser lokalen Temperaturerhöhung werden die Komponenten A und B durch Deblockierung bzw. Kapselöffnung aktiviert, wodurch der Reaktivklebstoff aushärtet.

Mit dem Begriff "Polymer" wird im vorliegenden Dokument einerseits ein Kollektiv von chemisch einheitlichen, sich aber in Bezug auf Polymerisationsgrad, Molmasse und Kettenlänge unterscheidenden Makromolekülen bezeichnet, das durch eine Polyreaktion (Polymerisation, Polyaddition, Polykondensation) hergestellt wurde. Andererseits umfasst der Begriff "Polymer" in diesem Dokument auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Mit dem Begriff "Polymerzusammensetzung" wird im vorliegenden Dokument eine homogene oder heterogene Mischung von Substanzen bezeichnet, die aus einem oder mehreren Polymeren besteht oder Polymere zu einem wesentlichen Teil enthält.
Der Begriff "Polyurethan" umfasst im vorliegenden Dokument sämtliche Polymere, welche nach dem Diisocyanat-Polyadditions-Verfahren hergestellt werden. Dies schliesst auch solche Polymere ein, die nahezu oder gänzlich frei sind von Urethangruppen, wie Polyether-Polyurethane, Polyester-Polyurethane, Polyether-Polyharnstoffe, Polyharnstoffe, Polyester-Polyharnstoffe, Polyisocyanurate, Polycarbodiimide, usw.
Die Vorsilbe "Poly" in Substanzbezeichnungen wie "Polyol", "Polyisocyanat" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Das blockierte Isocyanatgruppen enthaltende Polyurethanpolymer A wird hergestellt ausgehend von einem isocyanathaltigen Polyurethanpolymer. Ein solches isocyanatgruppenhaltiges Polyurethanpolymer wird dabei aus der Umsetzung von mindestens einem Polyol mit mindestens einem Polyisocyanat erhalten. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Der Überschuss an Polyisocyanat wird so gewählt, dass im resultierenden Polyurethanpolymer nach der Umsetzung aller Hydroxylgruppen des Polyols beispielsweise ein Gehalt an freien Isocyanatgruppen von 0.1 bis 15 Gewichts-%, bevorzugt 0.5 bis 5 Gewichts-%, bezogen auf das gesamte Polyurethanpolymer, verbleibt. Gegebenenfalls kann das Polyurethanpolymer unter Mitverwendung von Weichmachern hergestellt werden, wobei die verwendeten Weichmacher keine gegenüber Isocyanaten reaktive Gruppen enthalten.
Als Polyole für die Herstellung eines solchen isocyanatgruppenhaltigen Polyurethanpolymers können beispielsweise die folgenden handelsüblichen Polyole oder beliebige Mischungen davon eingesetzt werden: - Polyoxyalkylenpolyole, auch Polyetherpolyole genannt, welche Polymerisationsprodukte von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten.
Besonders geeignet sind Polyoxyalkylendiole oder Polyoxyalkylentriole, insbesondere Polyoxypropylendiole oder Polyoxypropylentriole.
Speziell geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxypropylendiole und -triole mit einem Molekulargewicht von 400 bis 8'000 g/mol. Unter "Molekulargewicht" oder "Molgewicht" versteht man im vorliegenden Dokument stets das Molekulargewichtsmittel Mₙ.
Ebenfalls besonders geeignet sind sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.
- Hydroxyfunktionelle Polybutadiene.
- Polyesterpolyole, hergestellt beispielsweise aus zwei- bis dreiwertigen
Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.
- Polycarbonatpolyole, wie sie durch Umsetzung beispielsweise der oben genannten ― zum Aufbau der Polyesterpolyole eingesetzten ― Alkohole mit Dialkylcarbonaten, Diarylcarbonaten oder Phosgen zugänglich sind.
- Polyacrylat- und Polymethacrylatpolyole.
Diese genannten Polyole weisen ein mittleres Molekulargewicht von 250 bis 30'000 g/mol, insbesondere von 1'000 bis 30'000 g/mol, und eine mittlere OH-Funktionalität im Bereich von 1.6 bis 3 auf.
Zusätzlich zu diesen genannten Polyolen können niedrigmolekulare zwei- oder mehrwertige Alkohole wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole und andere höherwertige Alkohole, niedrigmolekulare Alkoxylierungsprodukte der vorgenannten zwei- und mehrwertigen Alkohole sowie Mischungen der vorgenannten Alkohole bei der Herstellung des Polyurethanpolymers mitverwendet werden.
Als Polyisocyanate für die Herstellung eines solchen isocyanathaltigen Polyurethanpolymers werden handelsübliche Polyisocyanate verwendet. Als Beispiele seien die folgenden, in der Polyurethanchemie bestens bekannten Polyisocyanate erwähnt:
2,4- und 2,6-Toluylendiisocyanat (TDI) und beliebige Gemische dieser Isomeren, 4,4'-Diphenylmethandiisocyanat (MDI), die stellungsisomeren Diphenylmethandiisocyanate, 1,3- und 1,4-Phenylendiisocyanat, 2,3,5,6-Tetramethyl-1,4-diisocyanatobenzol, 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Cyclohexan-1,3- und - 1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI), 1,4-Diisocyanato-2,2,6-trimethylcyclohexan (TMCDI), m- und p-Xylylendiisocyanat (XDI), 1,3- und 1,4-Tetramethylxylylendiisocyanat (TMXDI), 1,3- und 1,4-Bis-(isocyanatomethyl)-cyclohexan, sowie Oligomere und Polymere der vorgenannten Isocyanate, sowie beliebige Mischungen der vorgenannten Isocyanate. Besonders bevorzugt sind MDI, TDI, HDI und IPDI sowie deren Mischungen. Am meisten bevorzugt sind MDI und TDI sowie deren Mischungen.
Durch Umsetzung des isocyanathaltigen Polyurethanpolymers mit einem Blockierungsmittel wird das blockierte Isocyanatgruppen enthaltende Polyurethanpolymer A erhalten. Diese Umsetzung erfolgt vorzugsweise dadurch, dass das isocyanathaltige Polyurethanpolymer im stöchiometrischen Verhältnis, bezogen auf den Gehalt an Isocyanatgruppen, mit dem Blockierungsmittel versetzt und bei einer Temperatur von 20 bis 120 °C solange zur Reaktion gebracht wird, bis annähernd keine freien Isocyanatgruppen mehr nachweisbar sind. Falls gewünscht, kann ein Katalysator mitverwendet werden, beispielsweise eine Zinn- oder eine BismutVerbindung.
Beispiele für geeignete Blockierungsmittel sind Phenole wie Phenol, Kresol, Xylenol, p-Ethylphenol, o-Isopropylphenol, p-tert-Butylphenol, p-tert-Octylphenol, Nonylphenol, Dodecylphenol, Thymol, p-Naphthol, p-Nitrophenol, p-Chlorophenol, 2-Pyridinol; Phenolgruppen-haltige Kohlenwasserstoff-Harze wie Cumaron-Inden-Harze, Petroleumharze, Terpenharze; Alkohole wie Methanol, Ethanol, Propanol, Isopropanol, Butanol, 2-Butanol, Isobutanol, Ethylenglykol, Ethylenglykol-methylether (Methyl-Cellosolve®), Ethylenglykolbutylether (Butyl-Cellosolve®), Ethylenglykol-phenylether (Phenyl-Cellosolve®), Diethylenglykol-monomethylether (Methyl-Carbitol®), Diethylenglykolmonobutylether (Butyl-Carbitol®), Benzylalkohol, Furfurylalkohol, Cyclohexanol; 1,3-Dicarbonylverbindungen wie Dimethylmalonat, Diethylmalonat, Diethylmethylmalonat, Ethylacetoacetat, 2,4-Pentandion; Mercaptane wie Butylmercaptan, Hexylmercaptan, Dodecylmercaptan, Thiophenol, 2-Mercaptopyridin; Carbonsäureamide wie Acetamid, Acetanilid, Acetanisid, Benzamid; Carbonsäureimide wie Succinimid, Maleimid; Amine wie Diisopropylamin, Dicyclohexylamin, 2,6-Dimethylpiperidin, Diphenylamin, Phenylnaphthylamin, Anilin, 9H-Carbazol; Stickstoff-Heterocyclen wie Imidazol, 2-Methylimidazol, 2-Ethylimidazol, Benzimidazol, Pyrazol, 3,5-Dimethylpyrazol, 1,2,4-Triazol, Benzotriazol; Harnstoffe wie Harnstoff, Thioharnstoff, Imidazolidin-2-on; Aldoxime wie Formaldoxim, Acetaldoxim; Ketoxime wie Methylethylketoxim, Methylisopropylketoxim, Methylisobutylketoxim, Methylamylketoxim, Diisopropylketoxim, Cyclohexanonoxim; Lactame wie ε-Caprolactam, δ-Valerolactam, γ-Butyrolactam, β-Propiolactam; Imine wie Ethylenimin; N-Hydroxysuccinimid; 2-Benzoxazolon; 1,3-Benzoxazin-2,4-dion; Bisulfite wie Natriumbisulfit, Kaliumbisulfit; sowie weitere Blockierungsmittel, wie sie in den beiden Review-Artikeln von D.A. Wicks und Z.W. Wicks, Jr., "Blocked Isocyanates", erschienen in Progress in Organic Coatings 36 (1999), 148-172 und Progress in Organic Coatings 41 (2001), 1-83, genannt sind. Als Blockierungsmittel bevorzugt sind Phenole, Kohlenwasserstoffharze, Alkohole, Oxime, Stickstoff-Heterocyclen, 1,3-Dicarbonylverbindungen und Lactame.

Der Reaktivklebstoff enthält weiterhin mindestens einen blockierten Härter B. Beispiele für geeignete blockierte Härter sind über eine Komplexbindung an Metalle gebundene Amine, im besonderen Komplexverbindungen von Methylendianilin (MDA) und Natriumchlorid. Solche Komplexverbindungen werden üblicherweise mit der Bruttoformel (MDA)₃·NaCl beschrieben. Ein geeigneter Typ ist als Dispersion in Diethylhexylphthalat unter dem Handelsnamen Caytur® 21 von Crompton Chemical erhältlich. Der Komplex zersetzt sich beim Erwärmen auf 80-160 °C mit bei höherer Temperatur zunehmender Geschwindigkeit, wodurch Methylendianilin als aktiven Härter freigesetzt wird.
Der blockierte Härter B kann auch ein mikroverkapselter Härter sein. Beispiele für geeignete Härter in mikroverkapselter Form sind zwei- oder mehrwertige Alkohole wie 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole, niedrigmolekulare Alkoxylierungsprodukte der vorgenannten zwei- und mehrwertigen Alkohole; kurzkettige Polyesterpolyole wie Terephthalsäurebisglykolester; aliphatische, cycloaliphatische und aromatische Aminoalkohole wie Ethanolamin, Propanolamin, Butanolamin, N-Methylethanolamin, Diethanolamin, Triethanolamin; Hydrazide von Dicarbonsäuren; aliphatische Polyamine wie Ethylendiamin, 1,2- und 1,3-Propandiamin, 2-Methyl-1,2-propandiamin, 2,2-Dimethyl-1,3-propandiamin, 1,3- und 1,4-Butandiamin, 1,3- und 1,5-Pentandiamin, 1,6-Hexamethylendiamin, 2,2,4- und 2,4,4-Trimethylhexamethylendiamin und Mischungen davon, 1,7-Heptandiamin, 1,8-Octandiamin, 4-Aminomethyl-1,8-octandiamin, 1,9-Nonandiamin, 1,10-Decandiamin, 1,11-Undecandiamin, 1,12-Dodecandiamin, Methyl-bis-(3-aminopropyl)amin, 1,5-Diamino-2-methylpentan (MPMD), 1,3-Diaminopentan (DAMP), 2,5-Dimethyl-1,6-hexamethylendiamin, Dimerfettsäurediamine; cycloaliphatische Polyamine wie 1,2-, 1,3- und 1,4-Diaminocyclohexan, Bis-(4-aminocyclohexyl)-methan, Bis-(4-amino-3-methylcyclohexyl)-methan, Bis-(4-amino-3-ethylcyclohexyl)-methan, Bis-(4-amino-3,5-dimethylcyclohexyl)-methan, 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)-cyclohexan, 1-Cyclohexylamino-3-aminopropan, 2,5(2,6)-Bis-(aminomethyl)-bicyclo[2.2.1]heptan (NBDA, hergestellt von Mitsui Chemicals), 3(4),8(9)-Bis-(aminomethyl)-tricyclo[5.2.1.0^{2,6}]decan, 1,4-Diamino-2,2,6-trimethylcyclohexan (TMCDA), 3,9-Bis-(3-aminopropyl)-2,4,8,10-tetraoxaspiro[5.5]undecan, 1,3- und 1,4-Xylylendiamin; Ethergruppen-haltige aliphatische Polyamine wie Bis-(2-aminoethyl)ether, 4,7-Dioxadecan-1,10-diamin, 4,9-Dioxadodecan-1,12-diamin und höhere Oligomere davon, Polyoxyalkylen-Polyamine mit theoretisch zwei oder drei Aminogruppen, erhältlich beispielsweise unter dem Namen Jeffamine® (hergestellt von Huntsman Chemicals); aromatische Polyamine wie Methylendianilin, Diaminodiphenylether, Diaminodiphenylsulfon, die isomeren Phenylendiamine, Aminodiphenylamin. Bevorzugt sind die genannten aliphatischen, cycloaliphatischen und aromatischen Polyamine.
Die Mikroverkapselung dieser Härter kann nach einer der gängigen Verfahren durchgeführt werden, beispielsweise mittels Sprühtrocknung, Grenzflächenpolymerisation, Koazervation, Tauch- oder Zentrifugenverfahren, Wirbelbettverfahren, Vakuum-Verkapselung, elektrostatische Mikroverkapselung. Die so erhaltenen Mikrokapseln haben eine Partikelgrösse von 0.1 bis 100 Mikrometern, bevorzugt 0.3 bis 50 Mikrometern. Die Grösse der Mikrokapseln ist so bemessen, dass sie sich beim Erhitzen einerseits effektiv öffnen, und andererseits nach der Aushärtung eine optimale Homogenität und damit Kohäsionsfestigkeit des Klebstoffs erhalten wird. Sie dürfen weiterhin keinen schädlichen Einfluss auf die Adhäsionseigenschaften des Klebstoffs ausüben. Als Material für die Kapselhülle kommen Polymere in Betracht, die im zu verkapselnden Härter unlöslich sind und einen Schmelzpunkt von 40 bis 200 °C aufweisen. Beispiele für geeignete Polymere sind KohlenwasserstoffWachse, Polyethylenwachse, Wachsester, Polyester, Polyamide, Polyacrylate, Polymethacrylate oder Mischungen mehrerer solcher Polymeren.

Der Reaktivklebstoff enthält weiterhin mindestens einen Typ von Nanopartikeln C mit ferromagnetischen, ferrimagnetischen, superparamagnetischen oder piezoelektrischen Eigenschaften. Der Begriff "Nanopartike" bezeichet im vorliegenden Dokument kristalline Strukturen aufweisende Teilchen mit einer mittleren Teilchengrösse bzw. -durchmesser von weniger als 500 nm, insbesondere weniger als 200 nm, bevorzugt weniger als 50 nm und besonders bevorzugt zwischen 3 und 30 nm. Insbesondere für die Ausnützung von Eigenschaften, wie sie durch Superparamagnetismus erhalten werden, soll die Teilchengrösse 30 nm nicht bedeutend überschreiten.

Die Nanopartikel werden durch elektrische, magnetische und/oder elektromagnetische Wechselfelder gezielt angeregt, wodurch sich ihre Umgebung, die Matrix des Reaktionsklebstoffs, durch Energieübertragung lokal stark erwärmt. Für die Anwendung elektrischer Wechselfelder eignen sich Nanopartikel aus piezoelektrischen Stoffen, beispielsweise Quarz, Turmalin, Bariumtitanat, Lithiumsulfat, Natriumtartrat, Kaliumtartrat, Seignette-Salz, Ethylendiamintartrat, Bleititanat, Bleizirkonat, Blei-Zirkonium-Titanate, Blei-Zirkonium-Lanthan-Titanate oder Ferroelektrika mit Perowskitstruktur. Für die Anwendung magnetischer Wechselfelder eignen sich Nanopartikel aus Substanzen mit ferrimagnetischen, ferromagnetischen oder superparamagnetischen Eigenschaften, insbesondere die Metalle Aluminium, Eisen, Cobalt, Nickel und Legierungen dieser Metalle, sowie Metalloxide vom Typ Maghemit (γ-Fe₂O₃), Magnetit (FeO·Fe₂O₃) und insbesondere Eisenmischoxide, sogenannte Ferrite, der allgemeinen Formel M^{II}O·Fe₂O₃, wobei M für eines oder mehrere Metalle aus der Gruppe Mangan, Zink, Kupfer, Cobalt, Nickel, Magnesium, Calcium oder Cadmium steht. Solche Ferrite besitzen eine über den Mischmetallgehalt in einem breiten Bereich einstellbare Curie-Temperatur. Die Curie-Temperatur ist die maximale Temperatur, auf die eine magnetische Substanz durch Anlegen eines magnetischen oder elektromagnetischen Wechselfeldes erwärmt werden kann, und entspricht damit einem intrinsischen Ueberhitzungsschutz. Bevorzugt liegt die Curie-Temperatur im Bereich von 100 bis 200 °C.
Insbesondere geeignet sind superparamagnetische Nanopartikel mit einer engen Teilchengrössenverteilung von 6 bis 15 nm, welche sich dadurch auszeichnen, dass sie keine Hysterese und keine Remanenz aufweisen. Dies führt zu deutlich effektiveren Energieeintragungs- und Erwärmungsraten der Partikel und der sie umgebenden Klebstoffmatrix.
Um eine gute Dispergierbarkeit der Nanopartikel in der Klebstoffmatrix zu gewährleisten sowie ein Agglomerieren oder Zusammenwachsen der Nanopartikel während der Lagerung des Klebstoffs zu verhindern, sind die eingesetzten Nanopartikel C vorzugsweise oberflächenmodifiziert oder -beschichtet, oder sind umschlossen von einer nichtmagnetischen, dispergierbaren Matrix, vorzugsweise pyrogenen Oxiden von Silicium, Aluminium, Titan, Zirkon oder Magnesium. Die Herstellung geeigneter oberflächenmodifizerter Nanopartikel ist beispielsweise beschrieben in WO 03/54102. Die Herstellung von geeigneten, von pyrogenen Oxiden umschlossenen Nanopartikeln ist beispielsweise beschrieben in EP 1 284 485. Die Nanopartikel sind im Reaktionsklebstoff in einer Menge von 0.1 bis 5 Gewichts-%, bevorzugt 0.3 bis 3 Gewichts-%, besonders bevorzugt 0.5 bis 2 Gewichts-%, bezogen auf den gesamten Klebstoff, enthalten.

Der Reaktivklebstoff enthält weiterhin mindestens ein Additiv **D**. Als geeignete Additive kommen beispielsweise die folgenden, in der Polyurethanindustrie gebräuchlichen Hilfs- und Zusatzmittel in Betracht:
Weichmacher, beispielsweise Ester organischer Carbonsäuren oder deren Anhydride, Phthalate, beispielsweise Dioctylphthalat oder Diisodecylphthalat, Adipate, zum Beispiel Dioctyladipat, Sebacate, organische Phosphor- und Sulfonsäureester, Polybutene und andere, mit Isocyanaten nicht reagierende Verbindungen; Reaktivverdünner und Vernetzer, beispielsweise mehrwertige Alkohole, Polyamine, Polyaldimine, Polyketimine oder aliphatische Isocyanate, beispielsweise 1,6-Hexamethylendiisocyanat, 2,2,4- und 2,4,4-Trimethyl-1,6-hexamethylendiisocyanat, 1,12-Dodecamethylendiisocyanat, Cyclohexan-1,3- und 1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat, 1,3- und 1,4-Tetramethylxylylendiisocyanat, Isocyanurate dieser Isocyanate, Oligomere und Polymere dieser Isocyanate sowie ihre Addukte mit Polyolen; anorganische und organische Füllstoffe, zum Beispiel gemahlene oder gefällte Calciumcarbonate, welche gegebenenfalls mit Stearaten beschichtet sind, insbesondere feinteiliges beschichtetes Calciumcarbonat, Russe, Kaoline, Aluminiumoxide, Kieselsäuren und PVC-Pulver oder Hohlkugeln; Fasern, beispielsweise aus Polyethylen; Pigmente; Katalysatoren für die Reaktion der Isocyanatgruppen, beispielsweise Organozinnverbindungen wie Dibutylzinndiacetat, Dibutylzinndilaurat, Dioctylzinndicarboxylat, Dibutylzinndichlorid, Dibutylzinndiacetylacetonat, Alkylzinnthioester, Bismut-organische Verbindungen oder Bismut-Komplexe, aminogruppenhaltige Verbindungen wie beispielsweise 2,2'-Dimorpholinodiethylether, und andere, in der Polyurethanchemie übliche Katalysatoren; Katalysatoren für die Hydrolyse von Aldiminogruppen, beispielsweise organische Carbonsäuren wie Benzoesäure oder Salicylsäure, organische Carbonsäureanhydride wie Phthalsäureanhydrid oder Hexahydrophthalsäureanhydrid, Silylester organischer Carbonsäuren, organische Sulfonsäuren wie p-Toluolsulfonsäure oder 4-Dodecylbenzolsulfonsäure, oder andere organische oder anorganische Säuren, oder Mischungen der vorgenannten Säuren; Rheologie-Modifizierer wie beispielsweise Verdickungsmittel, zum Beispiel Harnstoffverbindungen, Polyamidwachse, Bentonite oder pyrogene Kieselsäuren; Haftvermittler, insbesondere Silane wie Alkylsilane, Epoxyalkylsilane, Vinylsilane, Aldiminoalkylsilane, Methacryloxyalkylsilane und Isocyanatoalkylsilane, sowie oligomere Formen dieser Silane; Trocknungsmittel, beispielsweise p-Tosylisocyanat und andere reaktive Isocyanate, Orthoameisensäureester, Calciumoxid oder Molekularsiebe; Stabilisatoren gegen Wärme, Licht- und UV-Strahlung; flammhemmende Substanzen; oberflächenaktive Substanzen, beispielsweise Netzmittel, Verlaufsmittel, Entlüftungsmittel oder Entschäumer; Fungizide oder das Pilzwachstum hemmende Substanzen; sowie weitere, in der Polyurethanindustrie üblicherweise eingesetzte Substanzen.

Solche einkomponentigen Klebstoffe sind einfach in der Anwendung, diese Klebstoffe sind äusserst lagerstabil aufgrund der doppelten Blockierung von Harz und Härter und weisen keine Anfälligkeit auf Feuchtigkeit. Sie weisen gute mechanischen Festigkeiten auf, wobei diese Eigenschaften einstellbar sind.

### Beispiele für reaktive Klebstoffe: Zweikomponentige Systeme

Bei zweikomponentigen Systemen muss die eine Komponente von der anderen getrennt aufbewahrt werden und bei der Applikation gezielt freigesetzt werden. Der Reaktionsklebstoff besteht dabei aus einem Harz und einem Härter, wobei beide Komponenten durch eine Membran getrennt werden. Diese Membran muss bei der Applikation vorzugsweise mechanisch zerstört werden. Verschiedenen Verfahren zur Trennung der beiden Komponenten durch eine Membran können zur Anwendung gelangen:
a) Mikroverkapselung einer Komponente,
b) jede Komponente ist separat in einem Schaumstoff oder Vlies adsorbiert und gegebenenfalls durch eine Membran getrennt,
c) jede Komponente ist in einem Kissen aus einer dünnen Kunststofffolie eingeschlossen.

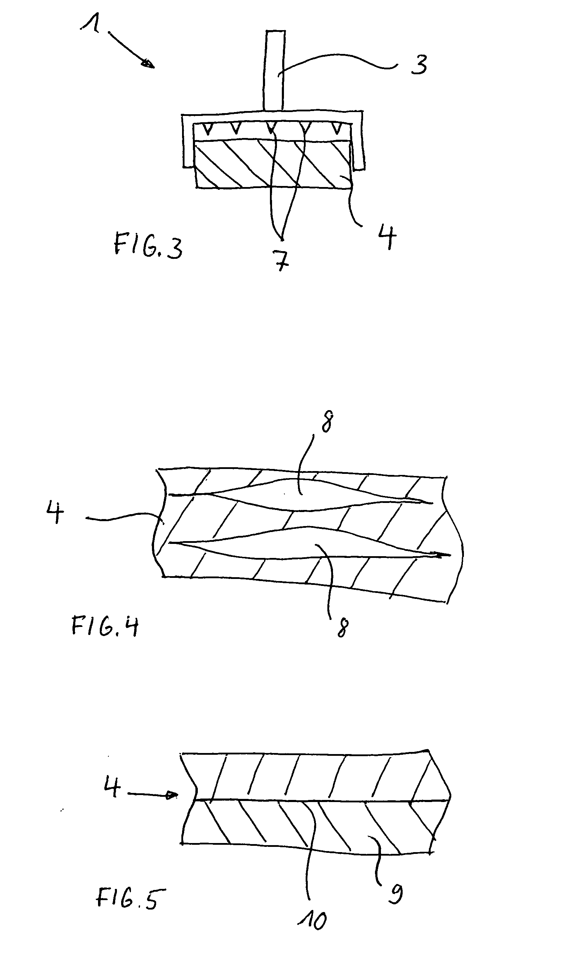

In Fig 3 ist ein erfindungsgemässes Befestigungsmittel 1 dargestellt, welches zusätzlich Berstmittel 7, hier Spitzen aufweist. Falls die Komponenten wie in Fig. 4 dargestellt in Behältern 8, insbesondere Kissen aus einer dünnen Folie, oder wie in Fig. 5 dargestellt in saugfähigen Materialien wie Vlies oder Schaumstoff, welche allenfalls durch eine Membran 10 getrennt sind aufbewahrt werden, können diese Komponenten durch die Berstmittel freigesetzt werden. Dies ist hier als mechanische Zerstörung durch die Spitzen dargestellt, die bei der Applikation die Membranen durchlöchern. Die Freisetzung der Komponenten kann jedoch auch durch beliebige andere Mittel erfolgen.

Für eine gute Durchmischung der Komponenten ist eine Viskosität < 7000 mPas notwendig. Die Viskosität kann durch eine Temperaturerhöhung eingestellt werden. Diese Temperatur kann beispielsweise durch Eintrag von Mikrowellen oder Induktion erfolgen, die Energieabsorption kann durch absorbierende Partikel in der Klebstoffformulierung wie elektrisch leitende Partikel oder nano- bzw mikroskalige Ferrite verbesserte werden, wie es auch oben bei den Beispielen für die einkomponentigen Systeme beschrieben ist.

Die als getrennte Komponenten vorliegenden lagerstabilen Reaktionsklebstoffe können beispielsweise basieren auf:

### 1) Epoxidharzen und Härtern

Als Epoxidharz können hier beliebige Epoxidharze verwendet werden, bevorzugt enthält das Epoxidharz mindestens 2 Epoxidgruppen im Molekül. Geeignete Epoxidharze sind besonders solche mit mehr als einer Epoxidgruppe, β-Methylglycidylgruppe oder 2,3-Epoxycyclopentylgruppe, die an ein Heteroatom wie z.B. Schwefel, bevorzugt aber an Sauerstoff oder Stickstoff gebunden ist, diese sind besonders Bis(2,3 epoxycyclopentyl)ether, Diglycidyl- oder Polyglycidylether von mehrwertigen aliphatischen oder aromatischen Alkoholen wie Butan-1,4-diol, oder Polyalkylenglykole wie Polypropylenglykol; Diglycidyl- or Polyglycidylether von cycloaliphatischen Polyolen wie 2,2-Bis(4-hydroxycyclohexyl)propan; Diglycidyl- oder Polyglycidylether von mehrwertigen Phenolen wie Resorcinol, Bis(p-hydroxyphenyl)methan, 2,2-Bis(p-hydroxyphenyl)propan (Bisphenol-A), 2,2-Bis(4'-hydroxy-3',5'-dibromophenyl)propan und 1,1,2,2-Tetrakis(p-hydroxyphenyl)ethan, oder von Kondensationsprodukten von Phenolen mit Formaldehyd, die unter sauren Bedingungen erhalten werden, wie Phenolnovolake und Kresolnovolake, sowie die di(β-methylglycidyl)- or poly(β-.methylglycidyl)ether der erwähnten mehrwertigen Alkohole oder Phenole. Ausserdem geeignet sind Polyglycidylester von mehrwertigen Carbonsäuren wie Phthalsäure, Terephthalsäure, Tetrahydrophthalsäure und Hexahydrophthalsäure, die N-Glycidyl-Derivative von Aminen, Amiden and heterocyclischen Stickstoffbasen wie N,N-Diglycidylanilin, N,N-Diglycidyltoluidin, N,N,O-Triglycidyl-p-aminophenol and N,N,N',N'-tetraglycidyl- bis(p-Aminophenyl)methan und Triglycidylisocyanurat.

Glycidylierte Novolake, Hydantoine, Aminophenole, Bisphenole oder aromatische Diamine sind eine bevorzugte Gruppe von Epoxidharzen. Bevorzugte Zusammensetzungen enthalten als Harz auch einen glycidylisierten Kresolnovolak, Bisphenol A diglycidylether oder einen Bisphenol-A-diglycidylether , der beispielsweise mit Bisphenol-A, dimeren Fettsäuren oder einem Gemisch davon vorverlängert ist, sowie deren Mischungen mit aliphatischen Diglycidylethern.

Mögliche Epoxidhärter sind saure oder basische Verbindungen. Beispiele geeigneter Härter sind Amine wie aliphatische, cycloaliphatische, aromatische oder araliphatische, bevorzugt primäre oder sekundäre Amine wie z. B. Ethylendiamin, Hexamethylendiamin, Trimethylhexamethylendiamin, Diethylentriamin, Triethylentetramin, Tetraethylenpentamine, N,N-Dimethylpropylen-1,3-diamin, N,N-Diethylpropylen-1,3-diamin, 2,2-bis(4'-Aminocyclohexyl)propan, 3,5,5-Trimethyl-3-(aminomethyl)cyclohexylamin ("Isophorondiamin"), m-Phenylendiamin, p-Phenylendiamin, bis(4-Aminophenyl)methan, bis(4-Aminophenyl) sulfon und m-Xylylenediamine; Addukte von Acrylnitril oder Monoepoxiden, Z.B. Ethylenoxide oder Propylenoxide und Polyalkylenepolyaminen, z.B. Diethylenetriamin oder Triethylentetramin; Aminterminierte Polyalkylenglykole wie JEFFAMINE (Huntsman), Addukte hergestellt mit einem Ueberschuss an Polyamin, wie Diethylenetriamin oder Triethylenetetramin, und Polyepoxiden, wie Bisphenol-A diglycidylether; Addukte von Monophenolen oder Polyphenolen und Polyamiden; Polyamide, besonders solche die sich ableiten von aliphatischen Polyaminen wie z.B. Diethylenetriamin oder Triethylenetetramine, und dimerisierten oder trimerisierten Fettsäuren (z.B. Versamide® aus dimerisierter Linolsäure), Polysulfide (z. B. erhältlich unter den Namen THIOKOL®.); Anilinformaldehyde; mehrwertige Phenole , z.B. Resorcinol, 2,2-bis(4-hydroxyphenyl)propan oder Phenolformaldehydharze (Novolake), mehrwertige Carbonsäuren und ihre Anhydride z.B. Phthalsäureanhydrid, Tetrahydrophthalsäureanhydrid, Hexahydrophthalsäureanhydrid, 4-Methylhexahydrophthalsäureanhydrid, 3,6-endomethylene-.tetrahydrophthalsäureanhydrid, 4-methyl-3,6-endomethylene-.4 - tetrahydrophthalsäureanhydrid (=methylnadic anhydrid), Bernsteinsäureanhydrid, Adipinsäureanhydrid, Trimethyladipinsäureanhydrid, Sebacisäureanhydrid, Maleinsäureanhydrid und Dodecylbernsteinsäureanhydrid; und Pyromellitsäuredianhydrid, Trimellitsäureanhydrid, Benzophenonetetracarbosäure-di-anhydrid oder Mischungen von Anhydriden.

Amine und Polyaminoamide sind bevorzugte Härter. Die Formulierung kann auch Beschleuniger oder Härtungskatalysatoren enthalten. Beispiele sind : tertiäre Amine oder quaternäre Amoniumverbindungen, Mannich-basen wie 2,4,6-tris(dimethylaminomethyl)phenol, Benzyldimethylamin, 2-Ethyl-4-methylimidazole; Monophenole oder Polyphenole wie Phenol, Bisphenol-A Salicylicsäure, Dicyandiamide; Bortrifluorid und seine Komplexe mit organischen Verbindungen wie BF₃. -ether-Komplexe and BF₃. -amin - Komplexe, z. B. BF₃. -monoethylamin-Komplex and Acetoacetanilid- BF₃. - Komplex; Phosphorsäure, sowie Triphenylphosphin.
Tertiäre Amine, Mannichbasen und Imidazole sind bevorzugt.

Weiterhin kann das Harz Zähigkeitsverbesserer wie Caboxyterminierte Polybutadiene oder Core Shell Partikel sowie entsprechende Thixotropiermittel enthalten, z.B. auf Basis von Harnstoffderivat in einem nicht-diffundierenden Trägermaterial. Vorteilhaft enthält dieses Thixotropiermittel ein blockiertes Polyurethanpräpolymer als Trägermaterial. Die Herstellung von solchen Harnstoffderivaten und Trägermaterialien sind im Detail in der Patentanmeldung EP 1 152 019 A1 beschrieben.

### 2) Polyisocyanaten und Polyol oder Aminhärtern

Geeignete Systeme sind beispielsweise:
- Polyoxyalkylenpolyole, auch Polyetherpolyole genannt, welche das Polymerisationsprodukt von Ethylenoxid, 1,2-Propylenoxid, 1,2- oder 2,3-Butylenoxid, Tetrahydrofuran oder Mischungen davon sind, gegebenenfalls polymerisiert mit Hilfe eines Startermoleküls mit zwei oder drei aktiven H-Atomen wie beispielsweise Wasser oder Verbindungen mit zwei oder drei OH-Gruppen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (kurz DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten. Speziell geeignet sind Polyoxypropylendiole und -triole mit einem Ungesättigtheitsgrad tiefer als 0.02 mEq/g und mit einem Molekulargewicht im Bereich von 1000 - 30'000 Dalton, Polyoxybutylendiole und -triole, Polyoxypropylendiole und -triole mit einem Molekulargewicht von 400 - 8'000 Dalton, sowie sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.
- Polyhydroxyterminierte Polybutadienpolyole, wie beispielsweise solche, die durch Polymerisation von 1,3-Butadien und Allylalkohol hergestellt werden;
- Styrol-Acrylnitril gepfropfte Polyetherpolyole, wie sie beispielsweise von Bayer unter dem Namen Lupranol geliefert werden;
- Polyhydroxyterminierte Acrylonitril/Polybutadien-Copolymere, wie sie beispielsweise aus Carboxylterminierten Acrylonitril/Polybutadien-Copolymere (kommerziell erhältlich unter dem Namen Hycar® CTBN von Hanse Chemie AG, Deutschland) und Epoxiden oder aus Aminoalkoholen hergestellt werden können;
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton;
- Polycarbonatpolyole, wie sie durch Umsetzung beispielsweise der oben genannten ― zum Aufbau der Polyesterpolyole eingesetzten ― Alkohole mit Dialkylcarbonaten, Diarylcarbonaten oder Phosgen zugänglich sind.

Vorteilhaft sind die Isocyanat-reaktiven Polymere di- oder höherfunktioneller Polyole mit OH-Equivalentsgewichten von 600 bis 6000 g/OH-Equivalent, insbesondere von 600 bis 4000 g/OH-Equivalent, vorzugsweise 700 - 2200 g/OH-Equivalent. Weiterhin vorteilhaft sind die Polyole ausgewählt aus der Gruppe bestehend aus Polyethylenglycolen, Polypropylenglycolen, Polyethylenglycol-Polypropylenglycol-Block-Co-polymeren, Polybutylenglycolen, hydroxylterminierten Polybutadienen, hydroxylterminierten Polybutadien-co-Acrylnitrilen, hydroxylterminierten synthetischen Kautschuken und Gemischen dieser genannten Polyole.
Im Weiteren können als Isocyanat-reaktive Polymere auch mit di- oder höherfunktionellen aminterminierten Polyethylenethern, Polypropylenethern, Polybutylenethern, Polybutadienen, Polybutadien/Acrylnitrilen, wie sie zum Beispiel die unter dem Namen Hycar® CTBN von Hanse Chemie AG, Deutschland vertrieben werden, sowie weiteren aminterminierten synthetischen Kautschuken oder Gemischen der genannten Komponenten verwendet werden.
Es ist weiterhin möglich, dass Isocyanat-reaktive Polymere auch kettenverlängert sein können, wie sie gemäss dem Fachmann in bekannter Art und Weise aus der Reaktion von Polyaminen, Polyolen und Polyisocyanate, insbesondere aus Diamine, Diole und Diisocyanaten, hergestellt werden können.
Als Isocyanat-reaktive Polymere bevorzugt sind Polyole mit Molekulargewichten zwischen 600 und 6000 Dalton ausgewählt aus der Gruppe bestehend aus Polyethylenglykolen, Polypropylenglykolen, Polyethylenglykol-Polypropylenglykol-Blockpolymeren, Polybutylenglykolen, hydroxylterminierte Polybutadiene, hydroxylterminierte Polybutadien-Acrylnitril-Copolymere sowie deren Gemische.
Als Isocyanat-reaktive Polymere sind insbesondere bevorzugt α,ω-Polyalkylenglykole mit C₂-C₆-Alkylengruppen oder mit gemischten C₂-C₆- Alkylengruppen, die mit Amino-, Thiol- oder, bevorzugt, Hydroxylgruppen terminiert sind. Besonders bevorzugt sind Polypropylenglykol oder Polybutylenglykol.

Als Polyisocyanat sind geeignet Diisocyanate, Triisocyanate oder Tetraisocyanate, insbesondere Di- oder Triisocyanate. Bevorzugt sind Diisocyanate.
Als Diisocyanate sind geeignet aliphatische, cycloaliphatische, aromatische oder araliphatische Diisocyanate, insbesondere handelsübliche Produkte wie Methylendiphenyldiisocyanat (MDI), Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)- bicyclo[2.2.1]heptan, 1,5-Naphthalindiisocyanat (NDI), Dicyclohexylmethyldiisocyanat (H₁₂MDI), p-Phenylendiisocyanat (PPDI), m-Tetramethylxylylen diisocyanat (TMXDI), etc. sowie deren Dimere. Bevorzugt sind HDI, IPDI, TMDI , MDI, oder TDI .

Geeignete Triisocyanate sind insbesondere Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate.

Weiterhin geeignet sind an der Oberfläche deaktivierte Partikel von festen Polyisocyanaten wie sie in R. Blum und H. Schupp, Progress in Organic Coatings(1990) S. 275-288 beschrieben sind.

### 3) Acrylaten und Methacrylaten und enkapsulierte radikalischen Initiatoren

Geeignete Systeme sind beispielsweise in der Anmeldung WO 02/070620 A1 sowie in der darin genannten Literatur beschrieben. Sie bestehen aus Methacrylsäureestern wie Methylmethacrylat und Tetrahydrofurfurylmethacrylat sowie aliphatischen Polyurethanacrylaten, mit Acrylsäure umgesetzten Elastomeren wie Polybutadien-acrylniril-copolymeren (Handelsname HYCAR VTBNX) oder Core-shell Polymeren. Weitere geeignete Systeme, die im wesentlichen aus Mischungen von Methacrylaten mit Elastomeren bestehen sind beispielsweise in den Schriften US 3890407, US 4106971, US 4263419 beschrieben. Als Initiatoren kommen besonders organische Peroxide in Frage, besonders Benzoylperoxid in Kombination mit Katalysatoren wie tertiäre Amine und/oder Komplexe oder Salze von Übergangsmetallen. Beispiele tertiärer Amine sind N,N-dimethyl-Benzylamin oder N-Alkylmorpholin Beispiele für Salze oder Komplexe sind Komplexe oder Salze von Nickel, Kobalt oder Kupfer.
Die Herstellung von enkapsulierten radikalischen Initiatoren wie Peroxide sind beispielsweise in der EP 0 730 493 B1 beschrieben.

### Anwendung der Befestigungselemente:

Nach Fig. 1 werden die Befestigungselemente 1 in eine Befestigungsvorrichtung 2 eingelegt. Mittels der Befestigungsvorrichtung wird das Befestigungselement 1 gegen den Grundkörper 5, z.B. eine Bauwerksoberfläche aus Glas, Stahl, Beton, usw. gedrückt. Im Falle der oben beschriebenen zweikomponentigen Systeme mit durch Membranen getrennten Komponenten, siehe Fig. 4 und 5, werden beim Aufdrücken des Befestigungselementes auf den Grundkörper diese Komponenten mittels der Berstmittel 7 freigesetzt. Durch die Befestigungsvorrichtung wird nun der Klebstoff erwärmt, was zu einer schnellen Aushärtung führt. Diese Erwärmung erfolgt vorteilhafterweise durch Wechselfelder wie Indujtion oder Mikrowellen. Im Klebstoff sind dazu wie oben beschrieben Partikel mit ferromagnetischen, ferrimagnetischen, superparamagnetischen oder piezoelektrischen Eigenschaften angeordnet, die sich durch die Strahlung erwärmen. Vorteilhafterweise sind diese Partikel Nanopartikel. Eine rasche Aushärtung ist durch die strahlungsinduzierte Erwärmung des Klebstoffs möglich, ohne dass die Umgebung mit aufgeheizt wird.

Falls durch die Art des gewählten Klebstoffes eine schnelle Aushärtung nicht möglich ist, können mittels am Befestigungselement 1 angeordneten Haftmitteln 6 eine vorübergehende Haftung am Grundkörper erzeugt werden, bis diese Haftung durch den Klebstoff übernommen wird.
Nachdem genügend Haftung zwischen dem Befestigungsmittel und dem Grundkörper aufgebaut ist, kann die Befestigungsvorrichtung vom Befestigungsmittel abgezogen werden. Nach der Aushärtung oder wenn eine genügende Haftkraft aufgebaut ist können weitere Elemente am Befestigungsmittel angebracht werden. Im Baubereich können dies zum Beispiel Deckenelemente, Verglasungen, Isolationen, Leitungen, usw. sein. Der reaktive Klebstoff des Befestigungselementes kann zusätzlich noch durch eine Abdeckung abgedeckt werden, welche vor der Verarbeitung entfernt wird. Dies ist insbesondere vorteilhaft, wenn das Befestigungselement zusätzliche Haftmittel aufweist.

Selbstverständlich ist die Erfindung nicht auf das gezeigte und beschriebene Ausführungsbeispiel beschränkt.

### Bezugszeichenliste

- 1: Befestigungselement
- 2: Befestigungsvorrichtung
- 3: Halterung
- 4: Reaktionsklebstoff
- 5: Grundkörper
- 6: Haftmittel
- 7: Berstmittel
- 8: Behälter
- 9: Saugfähiges Material
- 10: Membran

## Patentansprüche

1. Befestigungselement zur Befestigung an einem Grundkörper, insbesondere für Bauwerksoberflächen,
**dadurch gekennzeichnet,**
**dass** das Befestigungselement aus einer Halterung und einem reaktiven Klebstoff besteht.

2. Befestigungselement nach Anspruch 1,
**dadurch gekennzeichnet,**
**dass** am Befestigungselement Haftmittel angeordnet sind, mittels derer das Befestigungselement am Grundkörper befestigbar ist.

3. Befestigungselement nach Anspruch 1 oder 2,
**dadurch gekennzeichnet,**
**dass** im Klebstoff durch Wechselfelder anregbare Partikel angeordnet sind.

4. Befestigungselement nach Anspruch 1, 2 oder 3,
**dadurch gekennzeichnet,**
**dass** der reaktive Klebstoff ein einkomponentiger reaktiver Klebstoff ist, wobei mindestens das Harz oder der Härter blockiert ist.

5. Befestigungselement nach Anspruch 4,
**dadurch gekennzeichnet,**
**dass** Harz und der Härter blockiert ist.

6. Befestigungselement nach Anspruch 4 oder 5,
**dadurch gekennzeichnet,**
**dass** der einkomponentige reaktive Klebstoff mindestens ein blockiertes Isocyanatgruppen enthaltendes Polyurethanpolymer, mindestens einen blockierten Härter, mindestens einen Typ von Partikeln mit ferromagnetischen, ferrimagnetischen, superparamagnetischen oder piezoelektrischen Eigenschaften und mindestens ein Additiv umfasst.

7. Befestigungselement nach Anspruch 4, 5 oder 6,
**dadurch gekennzeichnet,**
**dass** der Härter mikroverkapselt ist.

8. Befestigungselement nach Anspruch 1, 2 oder 3,
**dadurch gekennzeichnet,**
**dass** der reaktive Klebstoff ein zweikomponentiger reaktiver Klebstoff ist, wobei die Komponenten vor der Verklebung durch mindestens eine Membran getrennt sind.

9. Befestigungselement nach Anspruch 8,
**dadurch gekennzeichnet,**
**dass** zumindest eine der Komponenten mikroverkapselt und / oder in einem saugfähigen Material adsorbiert und / oder in einem folienartigen Material verpackt ist.

10. Befestigungselement nach Anspruch 8 oder 9,
**dadurch gekennzeichnet,**
**dass** der zweikomponentige reaktive Klebstoff ein Epoxidharzsystem, ein Polyisocyanatsystem und / oder ein Acrylatsystem umfasst.

11. Befestigungselement nach Anspruch 8, 9 oder 10,
**dadurch gekennzeichnet,**
**dass** am Befestigungselement Berstmittel angeordnet sind, um die Membran aufzubrechen.

12. Befestigungselement nach einem der vorhergehenden Ansprüche,
**dadurch gekennzeichnet,**
**dass** der reaktive Klebstoff durch eine Abdeckung abgedeckt wird, welche vor der Verarbeitung entfernbar ist.

13. Verfahren zur Befestigung eines Befestigungselements nach Anspruch 1 bis 7,
**dadurch gekennzeichnet,**
**dass** das Befestigungselement mittels einer Befestigungsvorrichtung an den Grundkörper angedrückt wird, dass durch die Befestigungsvorrichtung Wechselfelder auf den Reaktionsklebstoff einwirken, dass der Klebstoff erwärmt wird und durch die Erwärmung aushärtet

14. Verfahren zur Befestigung eines Befestigungselements nach Anspruch 13,
**dadurch gekennzeichnet,**
**dass** das Befestigungselement mittels eines Haftmittels am Grundkörper gehalten wird, bis der Klebstoff genügend ausgehärtet ist.

15. Verfahren zur Befestigung eines Befestigungselements nach Anspruch 1, 2, 3 und 7 bis 11,
**dadurch gekennzeichnet,**
**dass** das Befestigungselement mittels einer Befestigungsvorrichtung an den Grundkörper angedrückt wird, dass die mindestens eine Membran welche die Komponenten trennt zerstört wird, dass durch die Befestigungsvorrichtung Wechselfelder auf den Reaktionsklebstoff einwirken, dass der Klebstoff erwärmt wird und durch die Erwärmung aushärtet.

16. Verfahren zur Befestigung eines Befestigungselements nach Anspruch 15,
**dadurch gekennzeichnet,**
**dass** die mindestens eine Membran welche die Komponenten trennt mechanisch zerstört wird.

17. Verfahren zur Befestigung eines Befestigungselements nach Anspruch 15 oder 16,
**dadurch gekennzeichnet,**
**dass** das Befestigungselement mittels eines Haftmittels am Grundkörper gehalten wird, bis der Klebstoff genügend ausgehärtet ist.
